# EUROPEAN PATENT APPLICATION

(11) **EP 2 623 158 A1**
(43) Date of publication of application: **07.08.2013**
(21) Application number: 11776817.6
(22) Date of filing: 25.08.2011
(51) Int. Cl.: A62C 3/02, B64D 1/18

(54) **FIRE EXTINGUISHING DEVICE**

(30) Priority: 29.09.2010 ES 201031446
(71) Applicant: Corujo Pardo, Ramon, 15679 Cambre (ES)
(72) Inventor: Corujo Pardo, Ramon, 15679 Cambre (ES)
(74) Representative: Alier Benages, Elisabet
(86) International application number: PCT/ES2011/070601
(87) International publication number: WO 2012/042079

(57) **Abstract**

Indicated for its use from aerial means, it enables putting out fires efficiently, reducing both the time used in the putting them out, and the costs arising in their extinguishing, mainly standing out due to comprising: a crane mechanism (4) adaptable to be located inside a helicopter (20), equipped with an upper swing arm (5) adapted to rotate and/or protrude externally from the fuselage of the helicopter (20); and a main body (6), linked to the upper swing arm (5) of the crane (4) through a holding rope (7), and which can be linked to a water tank (2) existing within the helicopter (20) through a hose (8), where said main body (6) has first nozzles (9) whereby water is sprayed on the area in flames, and which preferably comprises unfolding and telescopic irrigation arms (10), which also have spray nozzles (11).

## Description

### OBJECT OF THE INVENTION

The present invention relates to the fire extinguishing sector, and more specifically fire fighting from aerial means, such as helicopters, light aircraft, dirigibles or similar.

The main object of the present invention is a fire extinguishing device especially indicated for its use from aerial means of transport, which enables putting out fires more efficiently than with the current systems, reducing both the time used in putting them out, and the costs arising in said extinguishing.

### BACKGROUND OF THE INVENTION

At present, various fire fighting devices and apparatus are known in the state of the art. More specifically, the use of aerial means and aircraft is currently recognized as the most effective solution for extinguishing forest fires. One of the most used forms today for fire fighting from aerial means is that performed through a "helibalde" or "bambi bucket", such as that described in Spanish utility model.

Said "bambi" consists of a tank of folding flexible material, which is used as external load. Once unfolded, it fills by immersion due to gravity in water points suitable for this manoeuvre, lakes, reservoirs, dams, etc. The water contained in the "bambi", the capacity whereof can vary between 500 and 4,500 litres, is unloaded in one go in the place of the fire. These fire extinguishing mechanisms by "bambi" have the following drawbacks, among others:
- They involve considerable fuel costs, since the helicopters have to continually travel to a water uptake point to refill the "bambi".
- They involve an important danger for people on the ground trying to extinguish the fires, since the "bambi" discharges a large quantity of water in one go and with a lot of force, meaning it can violently hit people.
- They suppose a "dirty" flight configuration for helicopters, since there is a lot of dead weight hanging, destabilizing the aircraft and requiring great expertise by the pilot.
- The surface whereon the water is poured is very reduced, and it is discharged with great virulence. It is also not possible to attach the fire from its original source.

Forest fires have caused serious consequences in Spain in recent years both to people and their properties, and the environment. In general figures, we can say that the cost of fire extinguishing and prevention in Spain comes to approximately 450 million Euros per year. On the other hand, the average surface area burned per year in Spain, without distinguishing between types of vegetation, is around 150,000 hectares. According to these values, we can indicate that, from an economic standpoint, each hectare burned costs us approximately 3,000 Euros, making it necessary to seek a solution.

### DESCRIPTION OF THE INVENTION

The present invention resolves the aforementioned drawbacks providing an air-transported fire extinguishing device, which makes it possible to substantially increase the efficiency and performance of the aerial means when extinguishing fires, whether forest, industrial or urban fires, and whereby it is possible to reduce both the time used in putting out the fire, and the economic costs arising from the entire extinguishing process, from when the voice of alarm is received until the fire has been totally controlled.

The fire extinguishing device object of the invention is intended to initially remain located inside a helicopter or aerial means concerned, wherein there is also a water tank and at least one reel linked to the tank. Said fire extinguishing device comprises:
- a crane mechanism disposed inside the helicopter, equipped with an upper swing arm adapted to rotate and/or protrude externally from the fuselage of the helicopter, and
- a main body, linked to the upper swing arm of the crane through a holding rope, and linked to the water tank existing within the helicopter through a hose, said main body being preferably equipped with unfolding irrigation arms wherein different branches of the hose circulate, and said irrigation arms also having nozzles whereby water is sprayed on the area in flames.

Initially, the irrigation arms remain retracted and folded in vertical position beside the main body, so that once the fire area has been located and the holding rope has been lowered to the suitable height, it can be unfolded and remain open, ready to spray water through their nozzles. Preferably, in the unfolded position of the irrigation arms, they are disposed perpendicular to the vertical axis of the main body, by way of "inverted umbrella". Likewise, said main body preferably also has at least one water spraying nozzle throughout its surface, constituting another additional outlet of extinguishing agent for fire fighting.

Furthermore, it has been provided that said unfolding irrigation arms are also telescopic, in one or several levels, thus increasing their final length in the unfolded position and making it possible to sweep a greater perimeter of ground in flames.

According to a preferred embodiment of the invention the device described here further comprises an air compressor, or any source of compressed air, whereby it is possible to provide an adequate pressure to the water which exits through the nozzles, thus further optimizing if possible the fire extinguishing process. Preferably, said air compressor is installed beside the main body (element that is lowered), requiring for this an additional power cable which provides it with electricity from a power source, or electric generator, disposed in the helicopter. Nevertheless, it is also possible that said compressor is positioned, as the water tank, inside the helicopter.

It should be understood throughout the specification that when we speak of "water tank", this water can contain dissolved chemical products that enhance and optimize its extinguishing function.

According to another preferred embodiment, the holding rope, the water hose and the power cable additionally have safety means for their instantaneous cutting and release in the event that they are hooked, for example, in the tops of trees, or if the aircraft is in a situation of imminent danger.

The possibility has also been provided that the fire extinguishing device object of the invention additionally comprises selection means of the irrigation arms, whereby it is possible to determine which arms are those one wants to unfold. Said selection is carried out from inside the aircraft wirelessly. This possibility is especially interesting in the event of urban or industrial fires wherein it is necessary to introduce an extinguishing agent through a window, balcony or similar; or because it is necessary to form a water barrier on the facade.

Therefore, the fire extinguishing device of the present invention considerably optimizes the current fire fighting systems, allowing an attack from above and from inside the area in flames, and making it possible to spray water and/or chemical products in any place that can be accessed by an aerial means.

### DESCRIPTION OF THE DRAWINGS

To complement the description being made and in order to aid towards a better understanding of the characteristics of the invention, in accordance with a preferred example of practical embodiment thereof, a set of drawings is attached wherein, with illustrative and non-limiting character, the following has been represented:
Figure 1.- Shows a general view of a helicopter provided with the fire extinguishing device object of the invention.
Figure 2.- Shows a perspective view of a preferred embodiment of the main body, with its irrigation arms folded and retracted.
Figure 3.- Shows a top perspective view of the embodiment of figure 2, wherein the irrigation arms of the main body are totally unfolded, ready to spray water.

### PREFERRED EMBODIMENT OF THE INVENTION

Below, an example of preferred embodiment of the fire extinguishing device (1) object of the invention is described, referring to the aforementioned figures.

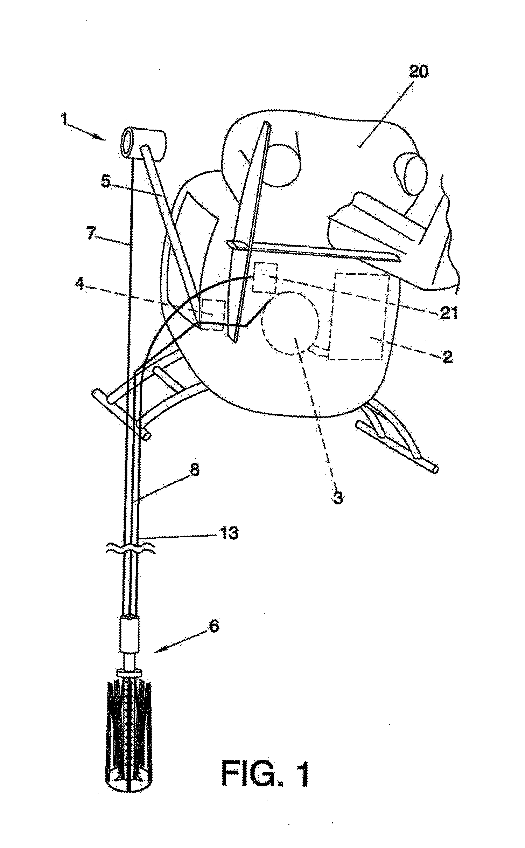

Figure 1 shows the rear view of a helicopter (20) wherein it has a water tank (2) and a reel (3), and which carries the fire extinguishing device (1) of the present invention, which comprises:
- a crane mechanism (4) adaptable to be located inside the helicopter (20), equipped with an upper swing arm (5) adapted to rotate and/or protrude externally from the fuselage of the helicopter (20),
- a main body (6), linked to the upper swing arm (5) of the crane (4) through a holding rope (7), and linked to the water tank (2) existing within the helicopter (20) through a hose (8), said main body (6) having first nozzles (9) whereby water is sprayed on the area in flames.

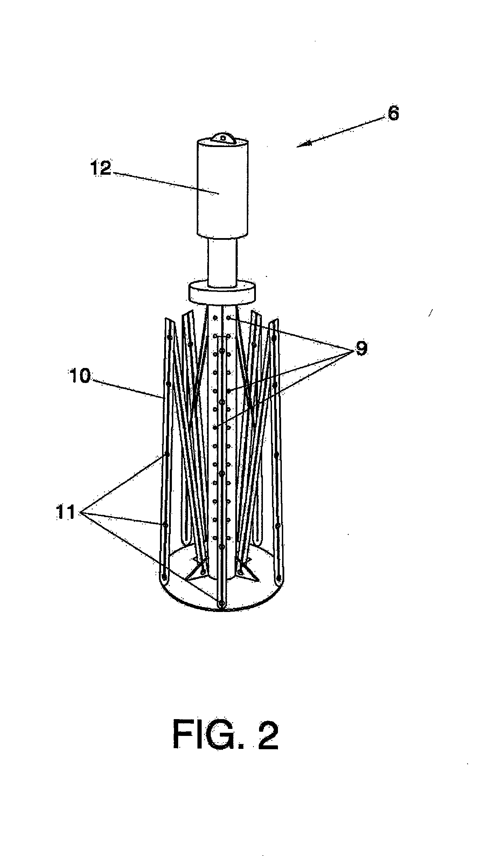

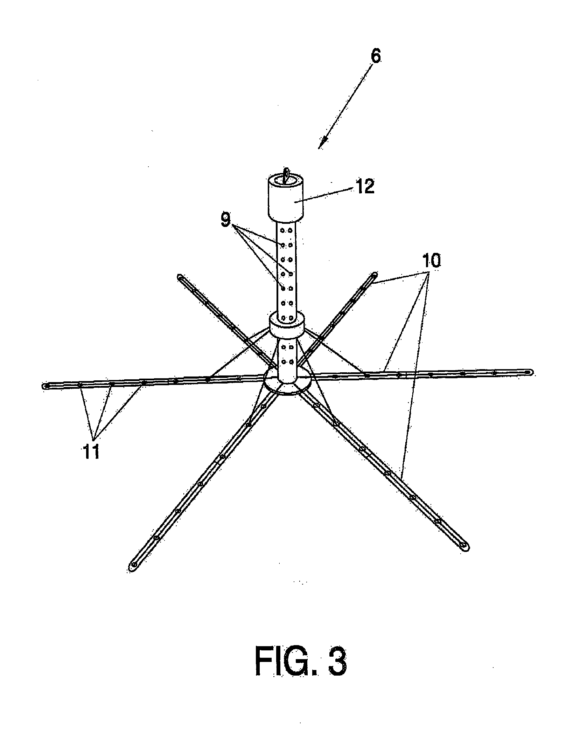

Furthermore, as represented in figures 2 and 3, the main body (6) further comprises unfolding and telescopic irrigation arms (10), wherein different branches of the hose (8) circulate, and said irrigation arms (10) also having second water spraying nozzles (11).

Said main body (6) has in its upper part an area enabled to comprise therein an air compressor (12), whereby it is possible to provide an adequate pressure to the water which exits through the nozzles (9, 11). This air compressor (12) is connected to a power source (21) disposed inside the helicopter (20) through an additional power cable (13) to provide it with electricity.

Likewise, it has been provided that the device of the present invention further comprises wireless selection means, not represented, whereby it is possible to determine which irrigation arms (10) are those one wants to unfold.

## Claims

1. Fire extinguishing device (1) intended to be located inside a helicopter (20) or aerial means concerned, wherein is also found a water tank (2) and at least one reel (3), **characterized in that** it comprises
- a crane mechanism (4) adaptable to be located inside the helicopter (20), equipped with an upper swing arm (5) adapted to rotate and/or protrude externally from the fuselage of the helicopter (20), and
- a main body (6), linked to the upper swing arm (5) of the crane (4) through a holding rope (7), and which can be connected to the water tank (2) existing within the helicopter (20) through a hose (8), where said main body (6) has at least one nozzle (9) whereby water is sprayed on the area in flames.

2. Fire extinguishing device (1) according to claim 1, **characterized in that** the main body (6) further comprises folding irrigation arms (10) wherein different branches of the hose (8) circulate, and said irrigation arms (10) also having second water spraying nozzles (11).

3. Fire extinguishing device (1) according to claim 2, **characterized in that** the irrigation arms (10) are telescopic, increasing their final length in unfolded position and making it possible to sweep a greater perimeter of ground in flames.

4. Fire extinguishing device (1) according to claims 1 and 2, **characterized in that** it further comprises an air compressor (12), whereby it is possible to provide an adequate pressure to the water which exits through the nozzles (9, 11).

5. Fire extinguishing device (1) according to claim 4, **characterized in that** the air compressor (12) is installed in the main body (6).

6. Fire extinguishing device (1) according to claim 5, **characterized in that** the air compressor (12) is connected to a power source (21) disposed inside the helicopter (20) through an additional power cable (13) to provide it with electricity.

7. Fire extinguishing device (1) according to claim 4, **characterized in that** the air compressor (12) is installed inside the helicopter (20).

8. Fire extinguishing device (1) according to claims 1 and 6, **characterized in that** the holding rope (7), the water hose (8), and the power cable (13) additionally have safety means for their instantaneous cutting and release in the event that they become hooked or the helicopter (20) is in a situation of imminent danger.

9. Fire extinguishing device (1) according to any of claims 2 or 3, **characterized in that** further comprises selection means of the irrigation arms (10), whereby it is possible to determine which irrigation arms (10) are those one wants to unfold.

10. Fire extinguishing device (1) according to claim 9, **characterized in that** the selection means of the irrigation arms (10) are wireless.
